(19) **Europäisches Patentamt / European Patent Office / Office européen des brevets**

(11) **EP 1 985 124 B1**

(12) **EUROPEAN PATENT SPECIFICATION**

(45) Date of publication and mention of the grant of the patent:
**01.09.2010 Bulletin 2010/35**

(21) Application number: **07704604.3**

(22) Date of filing: **15.02.2007**

(51) Int Cl.:
***H04N 7/34*** (2006.01)

(86) International application number:
**PCT/EP2007/051480**

(87) International publication number:
**WO 2007/093629 (23.08.2007 Gazette 2007/34)**

(54) **PROCESS FOR CODING IMAGES USING INTRA PREDICTION MODE**

PROZESS ZUR CODIERUNG VON BILDERN MIT INTRA-PRÄDIKTIONSMODUS

PROCÉDÉ DE CODAGE D'IMAGES AU MOYEN D'UN MODE DE PRÉDICTION INTRA

(84) Designated Contracting States:
**DE FR GB**

(30) Priority: **17.02.2006 EP 06290290**

(43) Date of publication of application:
**29.10.2008 Bulletin 2008/44**

(73) Proprietor: **Thomson Licensing**
**92130 Issy-les-Moulineaux (FR)**

(72) Inventors:
• **THOREAU, Dominique**
 **F-35510 Cesson-Sévigné (FR)**
• **LE MEUR, Olivier**
 **F-35160 Talensac (FR)**
• **ORHAND, Anita**
 **F-35200 Rennes (FR)**
• **PORTA, Leonard**
 **CH-1091 Aran (CH)**

(74) Representative: **Berthier, Karine**
**THOMSON**
**European Patent Operations**
**46 Quai Alphonse Le Gallo**
**92648 Boulogne Cedex (FR)**

(56) References cited:
 **WO-A-2007/004678    US-A1- 2003 202 588**
 **US-B1- 6 289 052**

• YU S-L ET AL: "New Intra Prediction using Intra-Macroblock Motion Compensation" JOINT VIDEO TEAM (JVT) OF ISO/IEC MPEG & ITU-T VCEG (ISO/IEC JTC1/SC29/WG11 AND ITU-T SG16 Q6), 6 May 2002 (2002-05-06), pages 1-10, XP002324083
• SUGIMOTO K ET AL: "Inter frame coding with template matching spatio-temporal prediction" IMAGE PROCESSING, 2004. ICIP '04. 2004 INTERNATIONAL CONFERENCE ON SINGAPORE 24-27 OCT. 2004, PISCATAWAY, NJ, USA, IEEE, vol. 1, 24 October 2004 (2004-10-24), pages 465-468, XP010784855 ISBN: 0-7803-8554-3

## Description

The invention relates to a process for coding images using intra prediction mode.

In MPEG-4 AVC, intra prediction of an image block, of size 4x4, 8x8 or 16x16 pixels, is done by 1D extrapolating in predefined directions from the neighbor rebuilt pixels. This prediction is done very locally, so only surrounding information is used. Images containing some kind of textures or repetitions of 2D-patterns can not be optimally intra predicted.

Methods of intra coding using motion estimation are suggested, for example in a paper of Siu-Leong Yu and Christos Chrysafis, titled "New Intra Prediction using Intra-Macroblock Motion Compensation", document JVT-C151, JVT Meeting, May 2002 or in a paper of Satoshi Kondo, Hisao Sasai and Shinya Kadono, titled "Tree structured hybrid intra prediction", 2004. Efficiency of such algorithms is not optimized as block matching relates to a same pattern.

One of the objects of the invention is to alleviate the aforesaid drawbacks.

Its subject is a process for a blockwise coding of a video image using the intra mode, as defined in the appended claims.

Other characteristics and advantages of the present invention will emerge upon reading the description of different embodiments, this description being made with reference to the drawings , in which:

FIG. 1 shows intra motion estimation in rebuilt image,
FIG. 2 shows a schema of the algorithm according to the invention,
FIG. 3 shows rebuilt macroblocks,
FIG. 4 shows rebuilt area in the current macroblock for 4x4 blocks,
FIG. 5 shows rebuilt area in the current macroblock for 8x8 blocks,
FIG. 6 shows shapes of the neighbor sub-partition for 4x4 blocks,
FIG.7 shows shapes of the neighbor sub-partition for 8x8 blocks,
FIG 8 shows examples of an edge located on a full-pel and on the next half-pel,
FIG.9 shows example of two 2x2 blocks and one half-pel 2x2 block between them,
FIG.10 shows horizontal interpolation of the half-pels,
FIG.11 shows vertical interpolation of the half-pels,
FIG.12 shows half-pels corresponding to initial full-pels,
FIG.13 shows quarter pel interpolation,
FIG.14 shows possible sub partition extension of the target block,
FIG 15 shows target shape function of coding order and block position,
FIG.16 shows weighting motion estimation function,
FIG.17 shows a table of predicted images,
FIG.18 shows a table of residue images.

A method called intra prediction based on motion estimation is proposed and consists in predicting the current block with an intra image motion estimation. The intra motion estimation is done similarly to the "traditional" inter motion estimation. The most important difference is that the reference image is not another already coded image but the current decoded image itself. Only the already coded part of the image, called the rebuilt image, containing previous macroblocks and previous blocks inside the current macroblock, is used. The aim of this method is to search inside the rebuilt image the block that is the most similar to the block to be predicted. That most similar block will be used as intra prediction the same ways as a prediction block obtained with a prediction mode of the standard MPEG-4 AVC.

This new intra prediction mode operating a motion estimation can be considered as another coding mode among the existing coding modes, for example the ones of the MPEG 4 standard. The chosen mode is for example the one giving the lowest coding cost for a given quality.

The process relating to the decoding comprises a step of motion estimation between a sub-partition already decoded and close to the current block to be decoded and the already decoded area of the current image. The part correlated to the sub-partition allows getting the part correlated to the current block which is the prediction block. This prediction block is added to the residue to get the current block. No motion vector is needed to find the prediction block.

The algorithm is based on the idea to take a sub-partition of the rebuilt image neighboring the current block to be predicted.

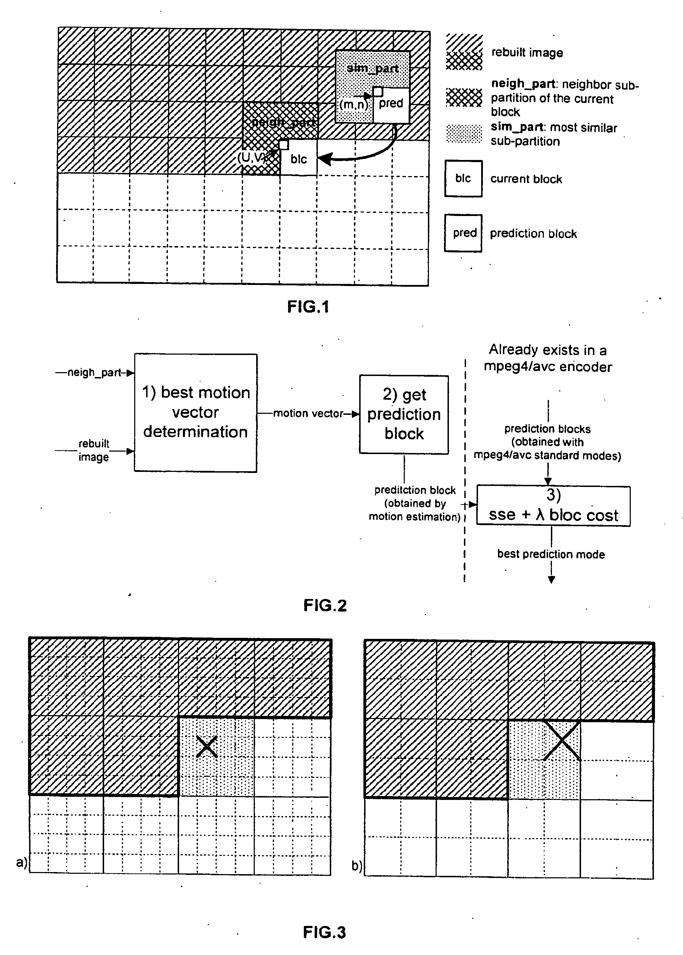

Figure 1 represents intra motion estimation in rebuilt image, where blc and neigh_part corresponds to the current block to be predicted. Scanning the rebuilt image with this sub-partition, the most similar sub-partition, called sim_part in the figure, will be found according to a similarity criterion. The prediction block called pred in the figure will be the adjacent block of the sub-partition sim_part found. That algorithm can also be applied in the decoder. It will give the same result because the rebuilt image is, by definition, the same in the encoder and in the decoder. So it is not necessary to transmit the intra motion vector.

The intra motion estimation has two main advantages:

- information to found a block prediction can be potentially extracted from all the rebuilt image and not only from the neighbor pixels of the current block as in MPEG-4 AVC intra prediction. The prediction contents can now be complex, 2D-patterns and textures.
- no motion vector is required to be transmitted from the encoder to the decoder.

The intra prediction algorithm using motion estimation processes each block, for example of size 4x4 or 8x8, of the current macroblock in zigzag order. The macroblocks of an image are processed in raster scan order. For each block, the steps of the algorithm are the followings, represented in figure 2:

1) Obtain the best motion vector that describes the position of sim_part, the candidate sub-partition in the rebuilt image the most similar to the neighbor sub-partition. That is done by scanning neigh_part in the rebuilt image, and at each position computing the difference between the neighbor and candidate sub-partitions. That difference is computed using a similarity criterion, for example the Sum of Absolute Differences or SAD in full-, half- and quarter-pel searches. The best motion vector is the one with the smallest difference.

2) Get the prediction block. The prediction is simply the block pred adjacent to sim_part corresponding to the motion vector described above.

3) Determine the best prediction block, from the one obtained by intra motion estimation and the others by standard MPEG-4 AVC intra prediction modes. That is done comparing the coding costs (see + $\lambda$ * block cost) of all the prediction blocks obtained.

Area of definition of the rebuilt image.

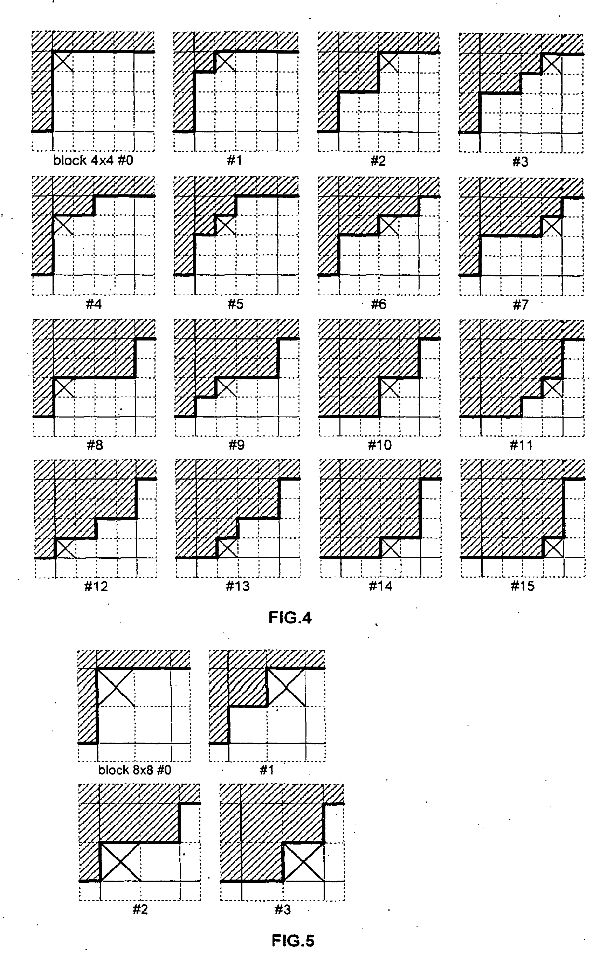

In figure 1, the area of definition of the rebuilt image was simplified. Actually this area contains the previously coded macroblocks, hatched area in figure 3. Inside the current macroblock, dotted area in figure 3, the limits of the area of definition depends on the position of the current block, block designed by a cross. It is a function of the position of the current 4x4 block in figure 3 (a) or of the current 8x8 block in figure 3 (b) and is represented respectively in figure 4 and in figure 5 for different positions of the current block within the macroblock.

Full-pel search

To obtain the best motion vector, the neighbor sub-partition of the current block is scanned over the rebuilt image defined in the previous paragraph in order to determine the most similar sub-partition. The precision unit of this search is one pixel. That is why it is called "full-pel search".
Definition of the neighbor sub-partition of a 4x4 block:

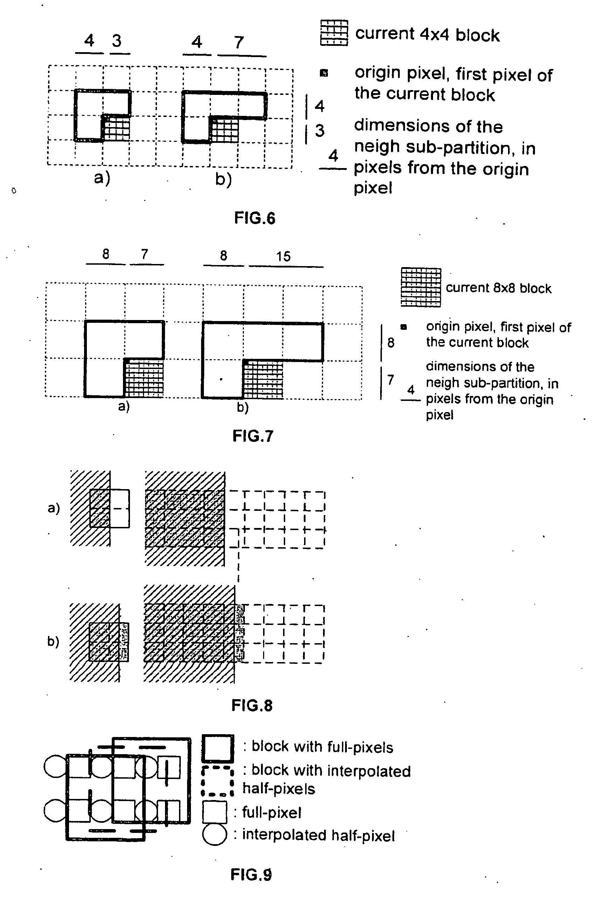

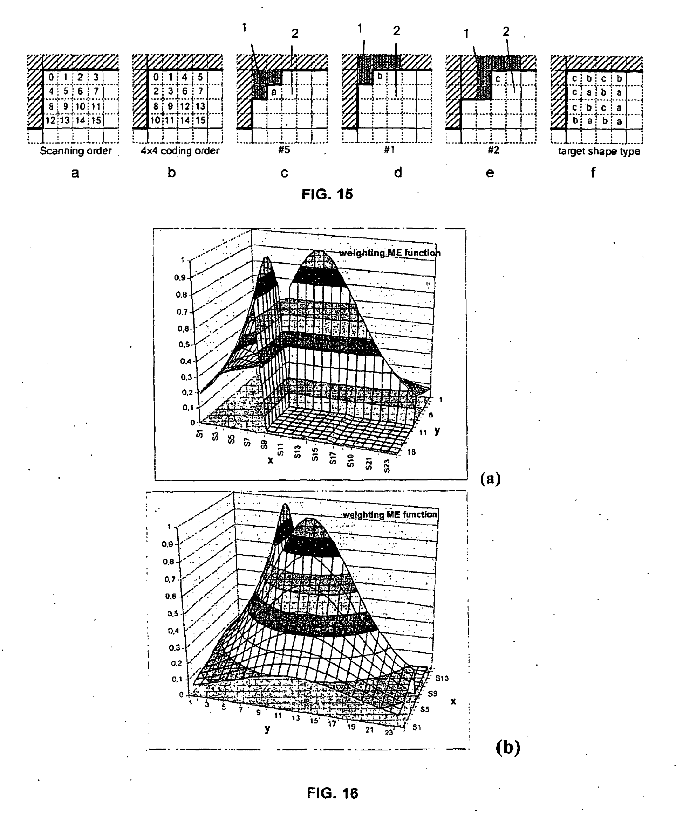

The neighbor sub-partition of a 4x4 block can have two different shapes depending on the position of the current block inside the macroblock. It has the shape (a) of figure 6 if the upper-right block is not in the rebuilt area (4x4 blocks number 5, 7, 11, 13, 15 and block number 3 if the macroblock is on the last column of the image) (see figure 15 for the numbering of the blocks) .It has the shape (b) if the upper-right block is in the rebuilt area (blocks number 0, 1, 2, 4, 6, 8, 9, 10, 13, 14 and block number 3 if the macroblock is not on the last column of the image). It can be seen in figure 4 that the neighbor sub-partitions thus defined can fit in the rebuilt area for each 4x4 block position in the macroblock.

Definition of the neighbor sub-partition of a 8x8 block:

Once again, the neighbor sub-partition of a 8x8 block can have two different shapes depending on the position of the current block inside the macroblock. It takes the shape (a) of figure 7 if the upper-right block is not in the rebuilt area (8x8 block number 3 and block number 1 if the macroblock is on the last column of the image). It takes the shape (b) if the upper-right block is in the rebuilt area (blocks number 0, 2 and block number 1 if the macroblock is not on the last column of the image). It can be seen in figure 5 that the neighbor sub-partitions thus defined can fit in the rebuilt area for each 8x8 block position in the macroblock.

Full-pel search algorithm:

The neighbor sub-partition is scanned over the rebuilt area, and the criterion for choosing the best candidate sub-partition as most similar sub-partition is the SAD (Sum of Absolute Differences). Adapted from the one described in the paper of Sahn-Gyu Park, Edward J. Delp and Hoaping Yu titled "Adaptive lossless video compression using an integer wavelet transform", ICIP, 2004, it is computed like this in case of intra 4x4 prediction:

$$SAD_{uv}(m, n) = \sum_{i=-1}^{-4} \sum_{j=-4}^{3} |dec(u + i, v + j) - dec(m + i, n + j)| +$$

$$\sum_{i=0}^{3} \sum_{j=-4}^{-1} |dec(u + i, v + j) - dec(m + i, n + j)|$$

where, according to figure 1:

- dec(u,v) corresponds to the causal part of the current block to predict: blc
- dec(m,n) is an homologous size block of dec(u,v) displaced of (u-m, v-n) vector in the context of motion estimation applied on the reconstructed part of the current frame,
- i and j indexes allow to scan all the pixels of the blocks dec(u,v) and dec(m,n)
- $SAD_{uv}(m,n)$ is sum of absolute difference of the pixels contains respectively in the block dec(u,v) and dec(m,n)

Notice that the indexes of the sums depend on the shape of the neighbor sub-partition. Here, shape (a) from figure 6 is the reference. And in case of intra 8x8 prediction these indexes are adapted.

Half-pel search

In full-pel search, the unit of the search grid is the pixel. It can happen that the best prediction is located between two unit positions. Such a prediction is a block constituted of interpolated pixels. Figure 8 shows an example of an edge located between two pixels (or on a half-pel). And Figure 9 shows an example of a block constituted of interpolated half-pels between full-pels.
The interpolation of a half-pel is done like in the MPEG-4 AVC standard in function of the three neighbor pixels in two directions. The interpolation algorithm is the following:

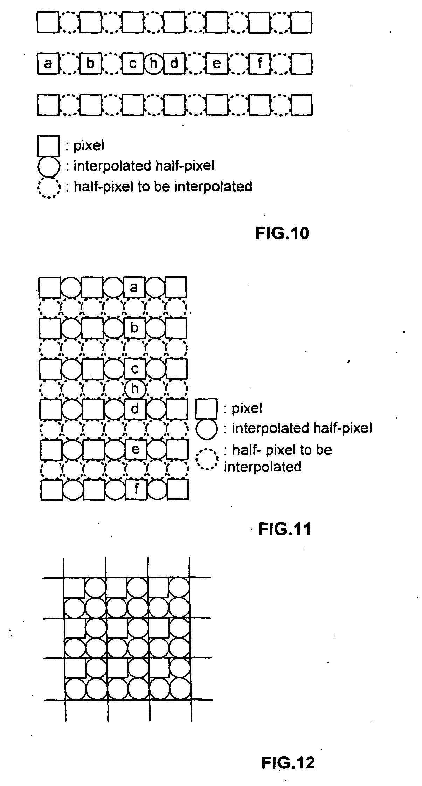

1) The half-pixels on each line containing full-pels are first horizontally interpolated from their 6 nearest horizontal neighbors as shown in figure 10.
The value of the interpolated half-pixel is:

$$h = round\left( \frac{a - 5b + 20c + 20d - 5e + f}{32} \right)$$

2) The other half-pixels are interpolated vertically from full- or half-pixels already interpolated during the first step as shown in figure 11. The same formula is used to compute vertically the values of the half-pels.

The figure 12 shows how every full-pel can be split into 4 half-pels (through 2 directions). Thus 3 half-pels need to be computed for each full-pixel. So 3.n.m half-pixels shall be computed on an image, if n and m are its dimensions.
In order not to compute all the 3.n.m half-pixels of an image and not to test all the half-pel sub-partitions in the image with the SAD, the half-pel search is done on the flight once per processed block. Starting from the most similar full-pel sub-partition computed before, the 8 half-pel sub-partitions around it are taken into consideration. The half-pixels needed by these 8 candidate sub-partitions are interpolated only. Then the 9 SADs, on all these 8 half-pel candidate sub-partitions and on the centre full-pel most similar sub-partition, are compared and the most similar half-pel sub-partition is chosen. Its adjacent block determines the prediction block.

Quarter-pel search

Similarly to the previous search precision improvement from full-pel to half-pel, the search can be improved from half-pel to quarter-pel.

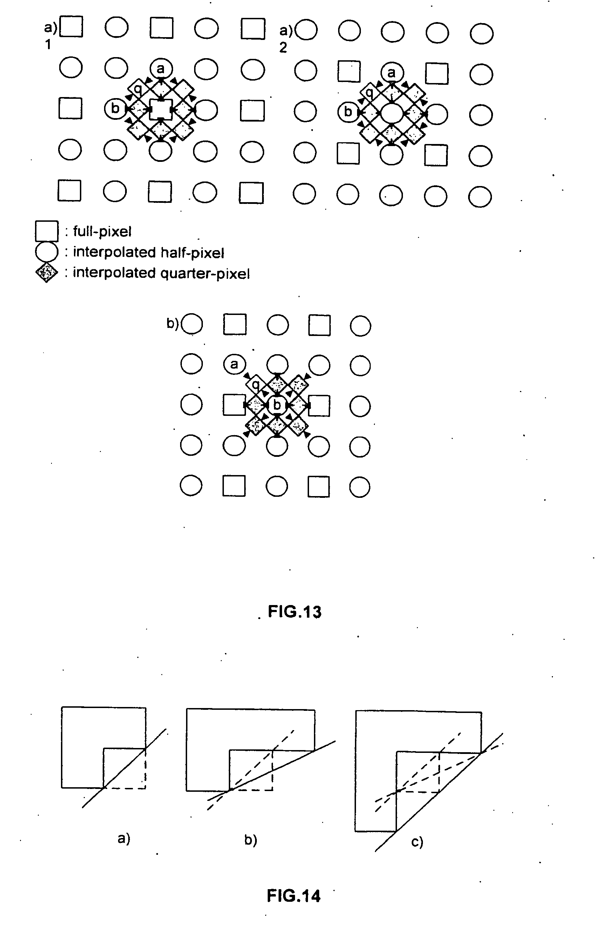

The quarter-pixels interpolation is done as in the MPEG-4 AVC standard with a linear interpolation of two adjacent neighbor pixels as described in figure 13. The interpolation algorithm is the following:

All the quarter pixels are interpolated from two adjacent neighbors.

- The 8 quarter pixels around a full pixel are interpolated as in $(a_1)$
- The 8 quarter-pixels around an interpolated half-pixel (between 4 full-pixels and 4 half-pixels) are interpolated as in $(a_2)$
- The 8 quarter-pixels around an interpolated half-pixel (between 2 full-pixels and 6 half-pixels) are interpolated as in (b)

The value of the interpolated quarter-pixel is:

$$q = \text{round}\left(\frac{a+b}{2}\right)$$

As before in half-pel search, all the quarter-pels of an image are not computed. Only the quarter-pels needed by the on the flight computation of the 8 candidate sub-partitions surrounding the most similar half-pel sub-partition are computed.

Then the 9 SADs, on the 8 candidates and of the most similar half-pel sub-partition, are compared and the most similar quarter-pel sub-partition is chosen. Its adjacent block determines the prediction block.

Intra 4x4 and 8x8 predictions

When both intra 4x4 and intra 8x8 prediction algorithms based on motion estimation are implemented, they can both be enabled at the same time without problem. They return respectively the 4x4 and 8x8 prediction blocks. These prediction modes can be integrated in the coding process.

The basic shape of the neighbor sub-partition is proposed on figure 1, thus in case of 4x4 pixels block to predict, the neighbor sub-partition size is equal to 8x8 pixels without the 4x4 block candidate. In fact, according to scanning order of the MB and the blocks inside the MB and in addition of the block matching opportunities induced by neighbor sub-partition size, this sub partition can take effectively different form.

The examples of figure 14 show that the possible match increases with the situation (a), (b) and (c). However, as seen previously, the configuration of the target depends on the current block position inside the macroblock. In case of 4x4 block, the neighbor sub-partition can have three different shapes depending on block coding order and the position of the current block inside the macroblock. The figure shows an example of matching/no matching with a typical diagonal down left line. It can be seen in figure 14 (a) that a strait edge with an angle (with the horizontal axis) smaller than $\pi/4$ and positioned in the down-right half of the current block cannot be predicted with the information available in the neighbor sub-partition with such a shape. In (b) the neighbor sub-partition is extended to the right thus only strait edges with an angle smaller than $\pi/8$ and positioned in the down-right quarter of the current block cannot be predicted. With a neighbor sub-partition extended to the right and to the down as in (c), all the strait edges going through the block can theoretically be predicted.

Figure 15 shows target shape function of coding order and block position. Figure 15 a) shows the scanning order of the blocks within the macroblock, figure 15 b) shows the coding order of these macroblocks (block 0, block 1, block 4...). Figures 15 c) to e) show different current block positions a, b, c calling for different sub-partitions corresponding respectively to (a), (b), (c) of figure 14. Figure 15 f) names the different blocks of the macroblock according to the used sub-partition.

In case of 4x4 block, the neighbor sub-partition can have three different shapes, reference 1, depending on block coding order and the position of the current block, named a, b or c, inside the macrobock, reference 2:

- it has the shape (a) of figure 14 if the upper-right block is not in the rebuilt area (4x4 blocks number 5, 7, 11, 13 and 15),
- it has the shape (b) if the upper-right block is in the rebuilt area, and not yet the bottom left one (blocks number 1, 3, 6, 9, 12 and 14),
- it has the shape (c) if the upper-right and bottom left blocks are in the rebuilt area (blocks number 0, 2, 4, 8 and 10),
- on the border of the frame (last column and last line block), other kind of targets shape are available.

The target shapes have been explained for 4x4 block sizes, concerning the 8x8 block the approach is similar, in the sense that the shapes are homologous.

Weighting function

Type of block matching is specific because the motion estimator tries to find a sub-partition with the help of surrounding pixel blocks. So as to favor the nearest pixel during block matching, one solution consists in using a weighting function. The value of the weighting coefficients can vary according to the distance of the pixel to match from the center of the block to predict. In that case, the 4x4 and 8x8 weighting functions used are:

$$w_{8x8}(i,j) = c \times \rho^{\sqrt{(i-11.5)^2+(j-11.5)^2}}$$

$$w_{4x4}(i,j) = c \times \rho^{2 \times \sqrt{(i-5.5)^2+(j-5.5)^2}}$$

where:

c is a normalization coefficient,
$\rho = 0.8$,
i and j are the coefficient coordinates on the target referential, in which the center of the block to encode is (5.5, 5.5) for 4x4 block and (11.5, 11.5) for 8x8 block,
and the origin (0, 0) is on the left superior corner of the target.

With this function, the relation number is:

$$SAD_{uv}(m,n) = \sum_{i=-1}^{-4}\sum_{j=-4}^{3}\left|dec(u+i,v+j) - dec(m+i,n+j)\right|.W_{4x4}(i+4,j+4) +$$

$$\sum_{i=0}^{3}\sum_{j=-4}^{-1}\left|dec(u+i,v+j) - dec(m+i,n+j)\right|.W_{4x4}(i+4,j+4)$$

When referring to figure 1, the pixels of the neigh_part close to the current block are favored through the use of this function. For example, a weighting coefficient is applied to the difference between the luminance of a pixel of the neigh_part and the luminance of the corresponding pixel of the sim_part, when performing the block matching, according to the position of the pixel of the neigh_part. Figure 16 a) gives an illustration of the weighting function dedicated to the 8x8 size block and specifically with a target shape similar to figure 14 b). x axis corresponds to the horizontal direction of the image and y axis to the vertical direction. The current block corresponds to S9 to S16 for the x axis and to 16 to 9 for the y axis. As can be seen, the pixels closest to this block have the highest coefficients. Figure 16 b represents the same function from the target point of view.

Tests and results

In the present configuration, the running time of the intra prediction based on motion estimation is very long. That is principally due to the search window size which is the entire already coded image (rebuilt image) for each block of an image. The motion estimation algorithm (full block matching) is done through each position in this window. That implies that the complexity of the algorithm is $O(N^2)$, where N is the total number of pixels of the image, O meaning a function. For example, when the height and width on an image are multiplied by 2, its number of pixels is multiplied by 4 and the running time is multiplied by $4^2 = 16$.

Computation of the complexity of the algorithm:

O(intra prediction based on ME, on rebuilt image) $\geq$ O(intra prediction based on ME, only on the left and above the

$$\text{current block)} \geq\; \geq\; O\left(\sum_{w=0}^{\textbf{width}}\sum_{h=0}^{\textbf{high}} w \cdot h\right) \geq\; O\left(\sum_{n=0}^{N} n\right) = O(0+1+2+...+N) = O(N^2).$$

Predicted image

The predicted image is made of the prediction blocks computed by the intra prediction algorithm based on motion estimation. The encoder subtracts it from the source image. Thus it obtains the difference image, also called residue image. The residue image is coded and transmitted to the decoder.

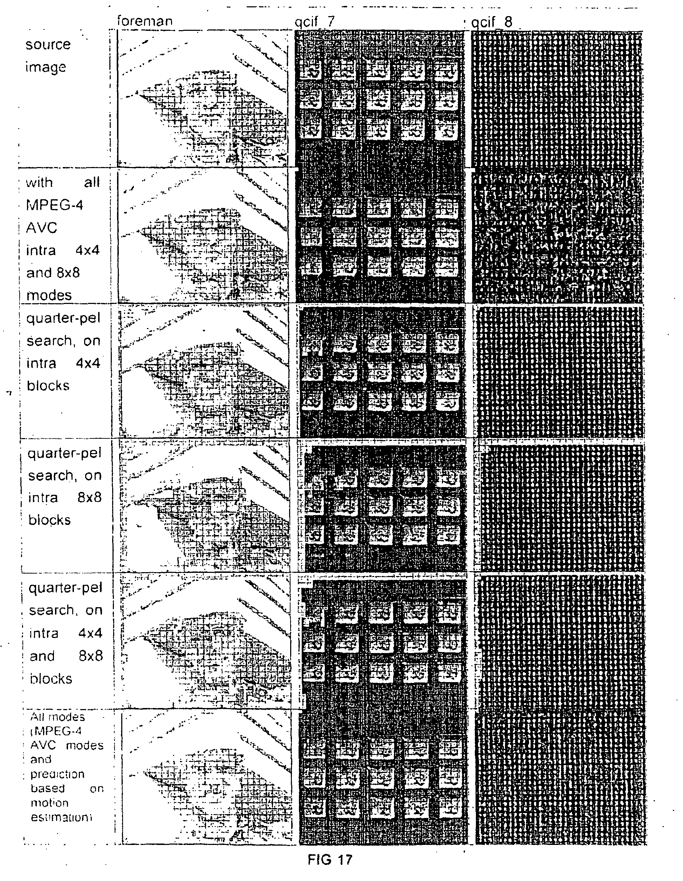

Figure 17 is a table showing the predicted image obtained after quarter-pel search on 4x4 blocks only, on 8x8 blocks only and on 4x4 and 8x8 blocks combined. These prediction images are compared with the prediction image resulted with all the standard MPEG-4 AVC prediction modes.

These tests were done on QCIF images (176x144 pixels) which sources are displayed on the first row of the table.

It can be noticed that the predicted image with both intra 4x4 and intra 8x8 blocks is not equal to an image constituted of blocks brought from the intra 4x4 prediction image and from the intra 8x8 prediction image. The observed differences are due to the fact that the decoded image is generated on flight, and changes, during the encoding in function of the intra4x4/intra8x8 MB decision choice.

The following visual observations can be done from the table :

First, in the "foreman" sequence, the intra prediction algorithm based on motion estimation algorithm predicts well the regular structure behind the man. But some wrong edges are detected, and some diagonal down-left to up-right edges are not well predicted. These cases are discussed below. The irregular parts of the image, the face and the jacket of the man, are less good predicted than with the MPEG-4 AVC algorithm.

Second, in the "qcif_7" sequence, the repetition of the contents of the TV screens is best predicted with the method based on motion estimation.

Third, in the "qcif_8" sequence, the intra motion estimation algorithm gives very good results compared to the standard MPEG-4 AVC intra prediction (all intra modes allowed). In this case, our algorithm finds the right position on the matrix symbols. It doesn't find the right symbol (very difficult...) but the gain is great comparing to MPEG-4 AVC.

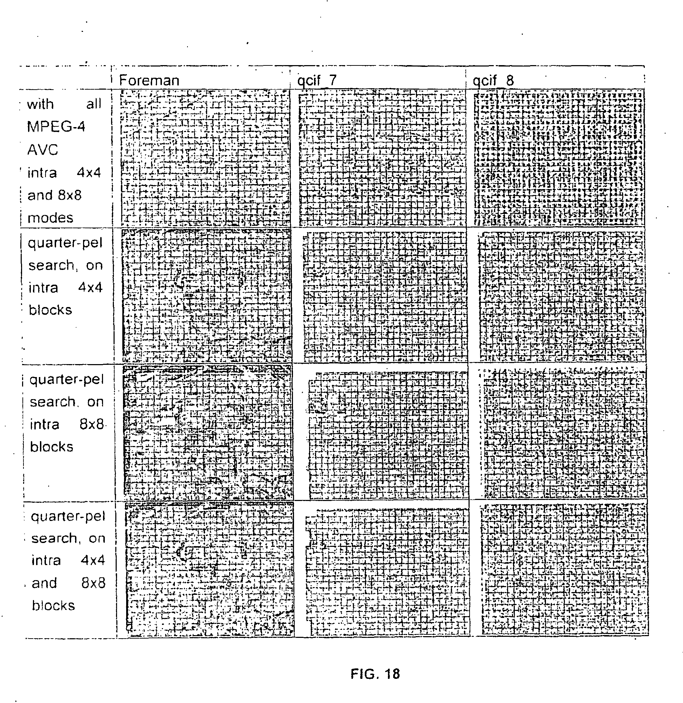

Figure 18 is a table where the residue images are displayed. These images are the difference between the luma component of the source image and of the predicted image.

As it was noticed with the prediction images, it can be seen in the residue images that the sequences "qcif_7" and "qcif_8" are visually better predicted with the algorithm based on motion estimation. In the "foreman" sequence, our algorithm visually decreases the residue in the regular structure behind the man. We will see below how much the bitstream size can be reduced with this method.

Performances

The mode performing an intra prediction based on the motion estimation is called below intra motion estimation mode. In the simulations described below, that mode replaces another intra mode of the MPEG-4 AVC standard.

The choice of which mode would be replaced was determined by simulations on sample sequences. The intra mode 5 (prediction along a vertical right axis) was in mean one of the less used modes. So the intra motion estimation mode replaces the mode 5 in the further simulations.

That mode substitution is done in order not to modify more the software and to produce decodable bitstreams. The bitstream is still decodable because only the sent residues generated after the blocks prediction have changed (compared to the original MPEG-4 AVC ones). When receiving a block coded with the intra motion estimation based mode the decoder believes that it decodes the intra mode 5. The decoded image is false because the decoder rebuilts the block with the original prediction mode 5. But the size of the coded bitstream corresponds to what is looking for.

Of course, the coding syntax of the encoder would have to be modified according the new prediction mode. The decoder would have to be modified too. It would implement the same intra motion estimation based algorithm. This modification of the decoder would be done in both cases when the intra motion estimation mode replaces the intra mode 5 and when it is added the standard modes.

The intra prediction mode based on motion estimation was tested on different CIF images (352x288 pixels). More than with QCIF sequences before, the computation time is here very long. It was first tested with intra 4x4 blocks only.

Table 1 below shows the difference of the bitstream size in percent between the intra 4x4 prediction based on motion estimation (substituted to the prediction mode 5) and MPEG-4 AVC in the same conditions. That difference is computed with the Bjontegaard criterion. It can be seen that passing from full-pel search to half-pel search and finally to quarter pel search gives in all cases better performances.

Table 1

| Sequence | 4x4 blocks, full pel | 4x4 blocks, half pel | 4x4 blocks, quarter pel |
|---|---|---|---|
| test_cif_1.yuv | 12,21 % | 13,50 % | 13,83 % |
| test_cif_2.yuv | 12,64 % | 13,73 % | 14,30 % |
| test_cif_3.yuv | 0,64 % | 0,94 % | 1,00 % |
| test_cif_4.yuv | 3,63 % | 3,74 % | 3,94 % |
| test_cif_5.yuv | -0,23 % | -0,28 % | -0,15 % |
| test_cif_6.yuv | 1,16 % | 1,48 % | 1,68 % |
| test_cif_7.yuv | 3,14 % | 3,36 % | 3,27 % |
| test_cif_8.yuv | 0,57 % | 0,50 % | 0,62 % |
| test_cif_9.yuv | 6,98 % | 7,63 % | 8,11 % |
| test_cif_10.yuv | 3,10 % | 3,67 % | 4,26 % |
| test_cif_11.yuv | 0,11 % | 0,14 % | 0,79 % |
| test_cif_12.yuv | 0,20 % | 0,19 % | 0,34 % |
| test_cif_13.yuv | 10,03 % | 10,82 % | 12,52 % |
| test_cif_14.yuv | 10,15 % | 10,34 % | 12,52 % |
| average | 4,60 % | 4,98 % | 5,50 % |

Coding with the intra 8x8 block size only, the same conclusion can be done from table 2 below. The bitstream size is reduced when the intra motion estimation based prediction is improved from full-pel precision to quarter-pel precision.

Table 2

| Sequence | 8x8 blocks, full pel | 8x8 blocks, half pel | 8x8 blocks, quarter pel |
|---|---|---|---|
| test_cif_1.yuv | 6,53 % | 7,95 % | 8,12 % |
| test_cif_2.yuv | 9,04 % | 10,25 % | 11,02 % |
| test_cif_3.yuv | 0,83 % | 0,94 % | 0,92 % |
| test_cif_4.yuv | 2,23 % | 2,38 % | 2,49 % |
| test_cif_5.yuv | -0,64 % | -0,58 % | -0,59 % |
| test_cif_6.yuv | 0,50 % | 0,69 % | 0,93 % |
| test_cif_7.yuv | 0,83 % | 0,80 % | 0,91 % |
| test_cif_8.yuv | 0,21 % | 0,24 % | 0,33 % |
| test_cif_9.yuv | 5,15 % | 5,75 % | 6,15 % |
| test_cif_10.yuv | 4,41 % | 4,36 % | 4,43 % |
| test_cif_11.yuv | 0,81 % | 0,93 % | 0,99 % |
| test_cif_12.yuv | -0,06 % | -0,01 % | 0,01 % |
| test_cif_13.yuv | 15,71 % | 17,75 % | 19,70 % |
| test cif 14.yuv | 7,86 % | 8,55 % | 10,52 % |
| average | 3,82 % | 4,29 % | 4,71 % |

In table 3 below showing the bitrate difference between the encoder with prediction based on motion estimation substituted to prediction mode 5 and MPEG-4 AVC (on intra 4x4 and 8x8 blocks), it can be observed that in less that half of the images the result are here better that the two previous ones. In the other images the results combining the 4x4 and 8x8 blocks sizes are not far from the results with only 4x4 or 8x8 blocks size.

Table 3

| Sequence | 4x4 and 8x8 blocks, quarter pel |
|---|---|
| test_cif_1.yuv | 14,27 % |
| test_cif_2.yuv | 15,41 % |
| test_cif_3.yuv | 0,76 % |
| test_cif_4.yuv | 3,63 % |
| test_cif_5.yuv | -0,56 % |
| test_cif_6.yuv | 1,52 % |
| test_cif_7.yuv | . 2,61 % |
| test_cif_8.yuv | 0,54 % |
| test_cif_9.yuv | 8,52 % |
| test_cif_10.yuv | 3,98 % |
| test_cif_11.yuv | 1,27 % |
| test_cif_12.yuv | 0,42 % |
| test_cif_13.yuv | 15,94 % |
| test cif 14.yuv | 12,40 % |
| average | 5,77 % |

Keeping good performances when passing from 4x4 block size to 8x8 block size is an improvement comparing to the previous methods based on the most probable mode estimation. Remember for example that the improvement of the first most probable mode estimation method was reduced in average from 75% when passing from 4x4 to 8x8 block size.

Conclusion on intra prediction based on motion estimation.

The results displayed in the previous paragraph show that the intra prediction based on motion estimation improves the quality of the MPEG-4 AVC intra prediction :

- The matching of similar 2D-patterns and texture elements is well done, if there is no rotation or zoom or perspective effect.
- The quality is not much reduced when passing from 4x4 blocks size to 8x8 blocks size. And the combination of the two block sizes gives good results.
- This algorithm is efficient where the MPEG-4 AVC predictions are not.

As examples, the following modifications can be applied to the process :

- reduction of the searching window to reduce the computation time or use of another motion estimator instead of full block matching to get a compromise between time consumption and quality of the results,
- change of the dimensions or the shape of the neighbor sub-partition. It can be extended to the down, as in figure 16(c), when the left down block of the rebuilt image is available.
- implementation of the motion estimation with other neighbor sub-partition similarity criterions instead of the SAD or in addition with it.
- implementation of the intra motion estimation on 16x16 blocks.
- use of the chrominance signal at the prediction level (motion compensation), for example by including chrominance in the motion estimation process.

**Claims**

1. Process for a blockwise coding of a video image using the intra mode, comprising :

- a step of reconstruction of the part of the image already coded,
- a step of intra prediction to calculate a prediction block,
- a step of calculation of a residue corresponding to the difference between the current block and the prediction block,

**characterized in that** the step of intra prediction comprises:

- a step of motion estimation, based on correlation, of a neighbouring part (1) of the current block (a, b, c), which is already coded, within the reconstructed part of the image, to get a correlated part, said motion estimation taking into account a weighting function to favor nearest pixels of the current block for determining the correlation,
- a step of defining a prediction block according to the correlated part and to the position of the current block regarding the neighbouring part.

2. Process according to claim 1, **characterized in that** the reconstructed part taken into account depends on the position of the current block (a, b, c) within the macroblock (2) it belongs to.

3. Process according to claim 1, **characterized in that** the neighboring part (1) of the current block (a, b, c) taken into account depends on the position of the current block within the macroblock (2) it belongs to.

4. Process according to claim 1, **characterized in that** the motion estimation implements a block matching algorithm.

5. Process according to claim 1, **characterized in that** the motion estimation uses a full-pel search, a half-pel search or a quarter-pel search.

**Patentansprüche**

1. Verfahren für eine blockweise Codierung eines Videobilds unter Verwendung des Intra-Modus, wobei das Verfahren umfasst:

- einen Schritt der Rekonstruktion des bereits codierten Teils des Bilds;
- einen Schritt der Intra-Prädiktion zum Berechnen eines Prädiktionsblocks,
- einen Schritt der Berechnung eines Rests, der der Differenz zwischen dem gegenwärtigen Block und dem Prädiktionsblock entspricht,

**dadurch gekennzeichnet, dass** der Schritt der Intra-Prädiktion umfasst:

- einen Schritt der Bewegungsschätzung auf der Grundlage der Korrelation eines benachbarten Teils (1) des gegenwärtigen Blocks (a, b, c), der bereits codiert ist, innerhalb des rekonstruierten Teils des Bilds, um einen korrelierten Teil zu erhalten, wobei die Bewegungsschätzung eine Gewichtungsfunktion berücksichtigt, um nächste Pixel des gegenwärtigen Blocks für die Bestimmung der Korrelation zu begünstigen,
- einen Schritt des Definierens eines Prädiktionsblocks in Übereinstimmung mit dem korrelierten Teil und mit der Position des gegenwärtigen Blocks hinsichtlich des benachbarten Teils.

2. Verfahren nach Anspruch 1, **dadurch gekennzeichnet, dass** der berücksichtigte rekonstruierte Teil von der Position des gegenwärtigen Blocks (a, b, c) innerhalb des Makroblocks (2), zu dem er gehört, abhängt.

3. Verfahren nach Anspruch 1, **dadurch gekennzeichnet, dass** der berücksichtigte benachbarte Teil (1) des gegenwärtigen Blocks (a, b, c) von der Position des gegenwärtigen Blocks innerhalb des Makroblocks (2), zu dem er gehört, abhängt.

4. Verfahren nach Anspruch 1, **dadurch gekennzeichnet, dass** die Bewegungsschätzung einen Blockanpassungsalgorithmus implementiert.

5. Verfahren nach Anspruch 1, **dadurch gekennzeichnet, dass** die Bewegungsschätzung eine Vollpixelsuche, eine Halbpixelsuche oder eine Viertelpixelsuche benutzt.

**Revendications**

1. Processus de codage par blocs d'une image vidéo utilisant le mode intra, comprenant :

- une étape de reconstruction de la partie de l'image déjà codée,
- une étape de prédiction intra pour calculer un bloc de prédiction,
- une étape de calcul d'un résidu correspondant à la différence entre le bloc courant et le bloc de prédiction,

**caractérisé en ce que** l'étape de prédiction intra comprend :

- une étape d'estimation de mouvement, en fonction d'une corrélation, d'une partie avoisinante (1) du bloc courant (a, b, c), lequel est déjà codé, au sein de la partie reconstruite de l'image, afin d'obtenir une partie corrélée, ladite estimation de mouvement prenant en compte une fonction de pondération pour favoriser les pixels les plus proches du bloc courant en vue de déterminer la corrélation,

- une étape de définition d'un bloc de prédiction en fonction de la partie corrélée et de la position du bloc courant relativement à la partie avoisinante.

2. Processus selon la revendication 1, **caractérisé en ce que** la partie reconstruite prise en compte dépend de la position du bloc courant (a, b, c) au sein du macrobloc (2) auquel il appartient.

3. Processus selon la revendication 1, **caractérisé en ce que** la partie avoisinante (1) du bloc courant (a, b, c) pris en compte dépend de la position du bloc courant au sein du macrobloc (2) auquel il appartient.

4. Processus selon la revendication 1, **caractérisé en ce que** l'estimation de mouvement implémente un algorithme d'appariement de blocs.

5. Processus selon la revendication 1, **caractérisé en ce que** l'estimation de mouvement utilise une recherche de résolution un pixel entier, un demi-pixel ou un quart de pixel.

FIG.1

FIG.2

FIG.3

block 4x4 #0  #1  #2  #3

#4  #5  #6  #7

#8  #9  #10  #11

#12  #13  #14  #15

**FIG.4**

block 8x8 #0  #1

#2  #3

**FIG.5**

FIG.6

FIG.7

FIG.8

FIG.9

☐ : pixel
◯ : interpolated half-pixel
⬚ : half-pixel to be interpolated

**FIG.10**

☐ : pixel
◯ : interpolated half-pixel
⬚ : half- pixel to be interpolated

**FIG.11**

**FIG.12**

a) 1

a) 2

b)

☐ : full-pixel
◯ : interpolated half-pixel
◈ : interpolated quarter-pixel

FIG.13

a)          b)          c)

FIG.14

| Scanning order | 4x4 coding order | #5 | #1 | #2 | target shape type |
|:---:|:---:|:---:|:---:|:---:|:---:|
| a | b | c | d | e | f |

FIG. 15

(a)

(b)

FIG. 16

FIG 17

| | Foreman | qcif_7 | qcif_8 |
|---|---|---|---|
| with all MPEG-4 AVC intra 4x4 and 8x8 modes | | | |
| quarter-pel search, on intra 4x4 blocks | | | |
| quarter-pel search, on intra 8x8 blocks | | | |
| quarter-pel search, on intra 4x4 and 8x8 blocks | | | |

FIG. 18

## REFERENCES CITED IN THE DESCRIPTION

*This list of references cited by the applicant is for the reader's convenience only. It does not form part of the European patent document. Even though great care has been taken in compiling the references, errors or omissions cannot be excluded and the EPO disclaims all liability in this regard.*

**Non-patent literature cited in the description**

- New Intra Prediction using Intra-Macroblock Motion Compensation. **Siu-Leong Yu ; Christos Chrysafis.** JVT-C151, JVT Meeting. May 2002
- **Satoshi Kondo ; Hisao Sasai ; Shinya Kadono.** *Tree structured hybrid intra prediction,* 2004

- **Sahn-Gyu Park ; Edward J. Delp ; Hoaping Yu.** Adaptive lossless video compression using an integer wavelet transform. *ICIP,* 2004